# EUROPÄISCHE PATENTSCHRIFT

(11) **EP 2 186 678 B1**
(45) Veröffentlichungstag und Bekanntmachung des Hinweises auf die Patenterteilung: **10.05.2017**
(21) Anmeldenummer: 09174595.0
(22) Anmeldetag: 30.10.2009
(51) Int. Cl.: B60Q 1/00

(54) **Fahrzeugleuchte**
Vehicle light
Lampe de véhicule

(30) Priorität: 12.11.2008 DE 102008043686
(43) Veröffentlichungstag der Anmeldung: 19.05.2010
(73) Patentinhaber: Huf Hülsbeck & Fürst GmbH & Co. KG, 42551 Velbert (DE)
(72) Erfinder: Van Gastel, Peter, 42699, Solingen (DE)
(74) Vertreter: Zenz Patentanwälte Partnerschaft mbB

(56) Entgegenhaltungen:
- EP-A- 1 739 787
- EP-A1- 1 550 579
- US-A- 5 446 470
- US-A1- 2007 002 574
- US-A1- 2007 086 200
- US-A1- 2008 158 045

## Beschreibung

Die Erfindung betrifft eine Außenleuchte für ein Kraftfahrzeug. Insbesondere betrifft die Erfindung eine Außenleuchte für ein Kraftfahrzeug gemäß den Merkmalen der unabhängigen Ansprüche 1 und 4. Die US 2007/0086200 offenbart eine Innenleuchte für ein Fahrzeug, welche z.B. im Fahrzeughimmel angeordnet ist und welche über einen Näherungssensor verfügt, welcher die Schaltung der Leuchte erlaubt.

Die EP 1 550 579 beschreibt eine weitere Innenleuchte mit einem berührungslosen Bedienkonzept.

Aus der EP 1 739 787 ist eine Außenleuchte bekannt, in welche eine Antenne für elektromagnetische Strahlung integriert ist.

Leuchtenanordnungen für Kraftfahrzeuge kommen an verschiedensten Stellen des Kraftfahrzeuges und mit verschiedensten Leuchtaufgaben zum Einsatz. Sowohl im Frontbereich des Kraftfahrzeugs als auch im Heck- und Seitenbereich sind Leuchtenanordnungen zur Unterstützung des Fahrers angeordnet, wobei sie die Fahrzeugumgebung ausleuchten. Weiterhin sind Leuchtenanordnungen zur Signalisierung von Fahrzeugposition und mit Warnfunktion für andere Verkehrsteilnehmer insbesondere im Heckbereich und im Frontbereich angeordnet (Blinkleuchten, Bremsleuchten, Rückfahrleuchten etc.).

Die Leuchtenanordnungen sind sowohl als Funktions- als auch als Designelement in Kraftfahrzeugen eingesetzt, da sie durch ihre Anordnung und Leuchtwirkung dominante Elemente im Kraftfahrzeug sind. Die Leuchtenanordnungen können nämlich naturgemäß nur im Außenbereich, also in der Fahrzeughülle des Kraftfahrzeuges angeordnet werden. Außerdem dürfen sie zur Gewährleistung der Funktionalität gewisse Mindestabmessungen nicht unterschreiten. Die Leuchten belegen daher beträchtlichen Platz am Kraftfahrzeug. Es besteht daher das Bedürfnis, den von den Leuchtenanordnungen eingenommenen Platz auch für andere Fahrzeugfunktionen und -einrichtungen nutzbar zu machen.

Der Erfindung liegt die Aufgabe zugrunde, eine Außenleuchte für Kraftfahrzeuge zur Verfügung zu stellen, die zusätzlich zu der bekannten Leuchtwirkung weitere Funktionalität zur Verfügung stellt.

Erfindungsgemäß wird diese Aufgabe durch eine Außenleuchte mit den Merkmalen des Patentanspruchs 1 oder des Patentanspruchs 4 gelöst.

Die Leuchtenanordnung der eingangs genannten Art weist erfindungsgemäß im Strahlbereich zwischen Leuchtmittel und Abstrahlfläche wenigstens eine Sensor-Elektrode auf, welche flächig ausgebildet ist und für abgestrahltes Licht des Leuchtmittels wenigstens teilweise transparent ist.

Die erfindungsgemäße Einbringung einer flächigen, transparenten Sensor-Elektrode in das Leuchtmittel ermöglicht die Erfassung von Zuständen im Bereich der Leuchtenanordnung. Die Sensor-Elektrode dient als kapazitive Elektrode zur Erfassung von Annäherungen oder Zugriffswünschen seitens eines Benutzers. Die Verwendung kapazitiver Elektroden zur Annäherungserfassung ist im Bereich der Kraftfahrzeuge, insbesondere Bei Zugangssystemen für Kraftfahrzeuge bekannt.

Dadurch, dass die Sensor-Elektrode im Wesentlichen transparent ausgeführt ist, wird die primäre Funktion der Leuchtenanordnung, nämlich die Abstrahlung von Licht, gar nicht oder kaum beeinflusst, während die zusätzliche Funktionalität bereitgestellt ist.

Als synergetischer Effekt dient das Leuchtengehäuse gleichzeitig als Schutz und Strahlkörper für das Leuchtmittel als auch als Gehäuse und Schutzkörper für Sensor-Elektrode. In dem Gehäuse ist die Sensor-Elektrode vor Umwelteinflüssen geschützt aufgenommen und kann ihre Funktion als Sensor-Elektrode in dieser abgeschirmten Umgebung übernehmen.

Erfindungsgemäß kann die Sensor-Elektrode einen gesamten Querschnitt des Leuchtengehäuses überbrücken oder auch nur in einem Bereich des Leuchtengehäuses ausgebildet sein. In Leuchtenanordnungen, bei denen mehrere Leuchten nebeneinander angeordnet sind (z.B. im Bereich von Heck-, Blink- und Bremslichtkombinationen), kann eine Sensor-Elektrode in jedem der Leuchten-Segmente oder auch segmentübergreifend ausgebildet sein. Es können also erfindungsgemäß in einer derartigen Leuchtenanordnung mehrere Sensor-Elektroden ausgebildet sein.

Wird die Sensor-Elektrode in der Nähe zu einer Außenfläche des Fahrzeuges angeordnet, kann eine Annäherung oder eine Berührung der Fahrzeugleuchte durch den Benutzer in verlässlicher Weise sensiert werden. Insbesondere da die Sensor-Elektrode großflächig ausgebildet werden kann, ist eine derartige Sensierung besonders präzise möglich.

Kapazitive Elektroden werden, wie oben erwähnt, bereits im Bereich von Türgriffen und Zugangskontrolle eingesetzt. Dort können sie jedoch aufgrund der Griffgestaltung und Möglichkeiten der Unterbringung regelmäßig nicht großflächig ausgebildet werden. Die Anordnung der Elektroden in den Leuchten bietet hingegen vielfältige Gestaltungs- und Schaltungsmöglichkeiten. Weiterhin ist im Bereich der Leuchtenanordnungen und insbesondere im Leuchtengehäuse, zumindest im Bereich der Abstrahlfläche einer Leuchtenanordnung, regelmäßig kein Material vorhanden, was die elektrischen Felder nennenswert abschirmt. Auch aus diesem Grund eignet sich die Nutzung der Leuchtenoberfläche besonders, um diesen Bereich als Sensorfläche zu nutzten.

In einer Weiterbildung der Erfindung ist die Elektrode in dem Leuchtengehäuse als Folie ausgebildet, welche innen auf die Abstrahlfläche des Gehäuses aufgebracht ist.

Eine derartige Elektrodenfolie kann besonders flexibel eingesetzt werden, auch z.B. als Nachrüstung für bestehende Leuchtengehäuse. Es ist möglich, die Folie in einem Mehrschichtaufbau auszubilden, wobei eine der Schichten als leitfähige Elektrodenfolie ausgebildet ist. Zusätzlich können Klebeschichten oder sonstige Haftschichten ausgebildet sein, um die Folie an einer Oberfläche des Gehäuses anzubringen. Ein derartiger Schichtaufbau hat außerdem den Vorteil, dass die Sensorfläche zusätzlich gegen Umwelteinflüsse geschützt ist. Als Folie kommen zum Beispiel Materialien in Frage, die als ESD-Folien zur Verpackung von elektrischen Komponenten zum Schutz vor elektrostatischer Aufladung verwendet werden. Diese Folien gibt es in Ausbildungen mit hoher Transparenz, so dass sie für den Einsatz in Fahrzeugleuchten geeignet sind.

In einer anderen vorteilhaften Ausführung ist die Elektrode als leitfähige Beschichtung auf der Innenseite der Abstrahlfläche des Gehäuses ausgebildet.

Die Beschichtung kann während der Fertigung des Leuchtengehäuses aufgebracht werden. Derartige Leuchtengehäuse können später sowohl mit Sensor-Funktionalität als auch ohne Sensor-Funktionalität verwendet werden, je nachdem ob die Beschichtung anschließend kontaktiert wird oder nicht. Außerdem kann auf die leitfähige Beschichtung einer zusätzliche Schutzbeschichtung oder Isolation aufgebracht werden, z.B. eine Art Klarlack. Es ist in diesem Zusammenhang von Vorteil, dass die Gehäuse der Leuchten üblicherweise nicht aus leitfähigem Material bestehen, so dass sich keine Probleme bei einem Kontakt zwischen Folie und Gehäuse ergeben.

In einer Abwandlung der Erfindung ist die Elektrode als leitfähige Schicht oder Beschichtung in oder auf einem transparenten Träger ausgebildet. Dieser Träger kann durch eine entsprechende Ausnehmung in der Leuchtenanordnung eingeschoben werden, um die Funktionalität der Leuchtenanordnung um eine Sensor-Funktionalität zu erweitern. Die Beschichtung kann als dünne Metallische Beschichtung auf einem Teil des Trägers oder den gesamten Träger bedeckend ausgebildet sein.

Weitere Ausführungsformen der Erfindung sind in den Ansprüchen angegeben.

Die Erfindung wird nun anhand der beiliegenden Zeichnung näher erläutert.

Figur 1 zeigt eine perspektivische schematische Ansicht einer erfindungsgemäßen Leuchtenanordnung für ein Kraftfahrzeug gemäß einem ersten Ausführungsbeispiel bei herausgezogener Sensor-Elektrode;

Figur 2 zeigt die Leuchtenanordnung gemäß dem ersten Ausführungsbeispiel mit eingeschobener Sensor-Elektrode.

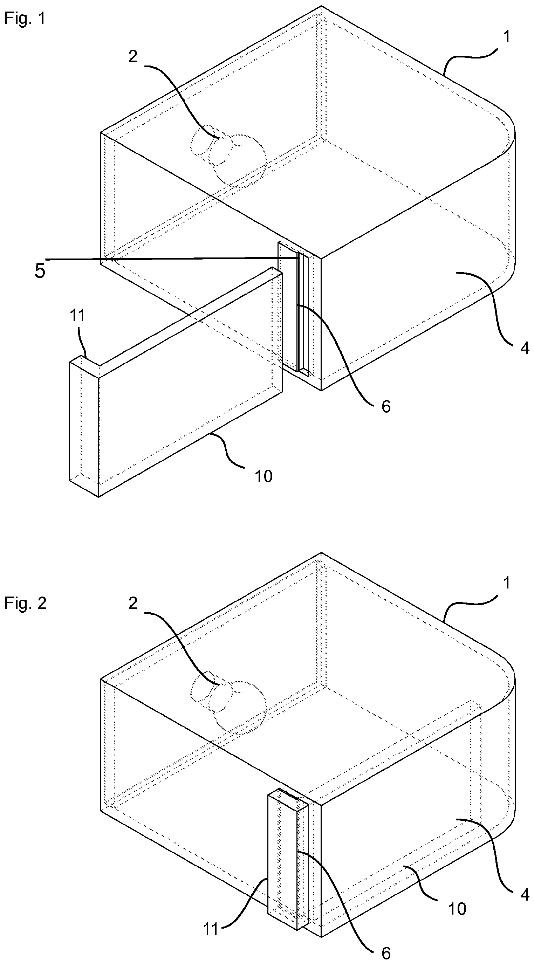

In Figur 1 ist eine Leuchtengehäuse 1 dargestellt, welches aus einem transparenten Kunststoffmaterial gefertigt ist. Bei dem gezeigten Leuchtengehäuse handelt es sich um eine im Fahrzeugheck angeordnete Leuchte, wie sie zum Beispiel für Blinkleuchten oder Rückfahrleuchten verwendet wird.

Auf der bei Montage dem Fahrzeuginnenraum zugewandten Seite ist im Gehäuse ein Leuchtmittel 2 in einer Halter- und Versorgungsfassungsplatte 3 (in den Abbildungen nicht gezeigt) angeordnet. Das Leuchtmittel ragt in den inneren freien Körper des Gehäuses 1 hinein und ist in Richtung einer Abstrahlfläche 4 des Gehäuses orientiert. An der außen liegenden Rückseite der Fassungsplatte 3 sind Versorgungs- und Steuerleitungen angeschlossen (nicht dargestellt), die in das Fahrzeuginnere führen. Das von dem Leuchtmittel 2 abgestrahlte Licht tritt durch den Innenraum des Gehäuses 1 und wird durch die Abstrahlfläche 4 nach außen abgestrahlt. Dazu kann die Abstrahlfläche 4 außerdem mit Diffusor-Mitteln oder einer besonders dafür ausgebildeten Oberfläche versehen sein.

In dem Lampengehäuse 1 ist bei diesem Ausführungsbeispiel eine Einschuböffnung 5 ausgebildet, welche zur Aufnahme einer Sensor-Elektrodenanordnung 10, 11 vorgesehen ist. Falls die Sensor-Elektrodenanordnung jedoch nicht in die Leuchte eingebracht werden soll, zum Beispiel weil die Sensor-Funktionalität nur als Option verfügbar ist, kann diese Öffnung mit einem passenden Abdeckmittel, zum Beispiel einer Gummiabdichtung, verschlossen werden. Benachbart zu der Öffnung 5 ist am Gehäuse 1 außen eine Kontaktleiste 6 angeordnet, welche Kontaktmittel für die Ansteuerung der einzubringenden Sensor-Elektrode bereitstellt. Die Kontaktleiste 6 ist mit Leitungen (nicht dargestellt) verbunden, die in das Fahrzeug zu einer Auswerteeinrichtung oder Steuereinrichtung geführt sind.

In Figur 1 ist weiterhin eine transparente Sensor-Elektrodenanordnung 10, 11 gezeigt, welche durch die Öffnung 5 in das Lampengehäuse 1 einschiebbar ist. Mit dem transparenten Sensor-Elektrodenabschnitt 10 ist ein Kontaktabschnitt 11 gekoppelt, welcher beim Einschub der Elektrode mit der Kontaktleiste 6 in Verbindung gebracht wird, um die Sensor-Elektrode zur Auswertung zu kontaktieren. In dem dargestellten Ausführungsbeispiel besteht der durch die Abschnitte 10 und 11 gebildete Winkel aus einem transparenten Kunststoffmaterial, welches für das durch die Leuchteinrichtung 2 abgestrahlte Licht transparent ist. Auf der Innenseite des durch die Abschnitte 10 und 11 gebildeten Winkels ist über die Abschnitte 11 und 10 eine leitende transparente Folie aufgebracht, die beim Einschub an der Kontaktleiste 6 anliegt.

Figur 2 zeigt die Leuchtenanordnung aus Figur 1, wobei die Sensor-Elektrode in das Leuchtengehäuse eingeschoben ist. Der Träger 10 mit der Sensor-Elektrode liegt im Strahlengang zwischen dem Leuchtmittel 2 und der Abstrahlfläche 4. Die Kontaktleiste 6 steht mit der Sensor-Elektrode, die als transparente Folie auf dem Träger (10, 11) aufgebracht ist, in leitender Verbindung. In der Konfiguration, wie sie in Figur 2 dargestellt ist, kann die Annäherung eines Benutzers oder die Berührung eines Benutzers der Abstrahlfläche 4 durch die Sensor-Elektrode erfasst werden.

Die Sensor-Elektrode wird in der dargestellten Ausführungsform in einem Abstand zu der Abstrahlfläche 4 gehalten, so dass ein Luftspalt zwischen Elektrode 10 und Gehäuse 1 besteht. Die Elektrode liegt jedoch so nahe am Gehäuse 1, dass Berührungen oder Annäherungen eines Benutzers im Bereich der Abstrahlfläche 4 erfassbar sind. Ein Benutzer kann beispielsweise durch ein Berühren der Abstrahlfläche 4 eine fahrzeugseitige Funktion auslösen. Durch die Beabstandung der Sensor-Elektrode von der Abstrahlfläche ist jedoch ein unmittelbarer Einfluss von zum Beispiel auf der Abstrahlfläche 4 befindlichem Regen oder Feuchtigkeit ausgeschlossen.

Im Rahmen der Erfindung sind zahlreiche Abwandlungen möglich. Zum Beispiel können mehrere unterschiedliche Sensorbereiche in einer Leuchtenanordnung gebildet werden. Außerdem kann jedem Leuchtensegment, wovon mehrere in einem Rückleuchtenaufbau zu finden sind, eine separate Funktionalität zugeordnet werden. Die transparente Sensor-Elektrode kann unmittelbar auf dem Gehäusematerial aufgebracht sein oder, wie im Ausführungsbeispiel dargestellt, auf einem separatem Träger oder Bauteil.

## Patentansprüche

1. Aussenleuchte für ein Kraftfahrzeug, mit einem Leuchtengehäuse (1), welches in Abstrahlrichtung wenigstens eine teilweise transparente Abstrahlfläche (4) aufweist und mit einem Leuchtmittel (2), welches am oder im Gehäuse in einer Halte- und Versorgungsfassung angeordnet ist und zur Abstrahlung durch die teilweise transparente Abstrahlfläche (4) orientiert ist, wobei im Strahlbereich zwischen Leuchtmittel (2) und teilweise transparenter Abstrahlfläche (4) wenigstens eine Sensor-Elektrode (10,11) angeordnet ist, **dadurch gekennzeichnet, dass** die Sensor-Elektrode (10,11) eine kapazitive Sensor-Elektrode ist, und dass die kapazitive Sensor-Elektrode (10,11) flächig als leitfähige Beschichtung auf der Innenseite der teilweise transparenten Abstrahlfläche (4) des Leuchtengehäuses (1) ausgebildet ist und für abgestrahltes Licht des Leuchtmittels (2) transparent ist, wobei die kapazitive Sensor-Elektrode (10,11) zum Sensieren von Annäherungen eines Benutzers kontaktiert ist und zur Erfassung von Zugriffswünschen eines Benutzers auf ein Zugangssystem des Kraftfahrzeugs ausgebildet ist.

2. Aussenleuchte nach einem der vorangehenden Ansprüche,
**dadurch gekennzeichnet, dass** die Transparenz im kapazitiven Sensor-Elektrodenbereich für das abgestrahlte Licht größer als 80% ist.

3. Aussenleuchte nach einem der vorangehenden Ansprüche, **dadurch gekennzeichnet, dass** die kapazitive Sensor-Elektrode (10,11) im Randbereich mit Signalleitungen leitend gekoppelt ist, welche mit einer Auswerteschaltung gekoppelt sind.

4. Aussenleuchte für ein Kraftfahrzeug, mit einem Leuchtengehäuse (1), welches in Abstrahlrichtung wenigstens eine teil-weise transparente Abstrahlfläche (4) aufweist und mit einem Leuchtmittel (2), welches am oder im Gehäuse in einer Halte- und Versorgungsfassung angeordnet ist und zur Abstrahlung durch die teilweise transparente Abstrahlfläche (4) orientiert ist, wobei im Strahlbereich zwischen Leuchtmittel (2) und teilweise transparenter Abstrahlfläche (4) wenigstens eine Sensor-Elektrode (10,11) angeordnet ist,
wobei die Sensor-Elektrode (10,11) flächig ausgebildet ist und für abgestrahltes Licht des Leuchtmittels (2) transparent ist,
**dadurch gekennzeichnet,**
**dass** die Sensor-Elektrode (10,11) eine kapazitive Sensor-Elektrode ist, wobei die kapazitive Sensor-Elektrode (10,11) zum Sensieren von Annäherungen eines Benutzers kontaktiert ist, wobei die kapazitive Sensor-Elektrode (10,11) als leitfähige Beschichtung auf einem transparenten Träger ausgebildet ist, der zwischen teilweise transparenter Abstrahlfläche (4) und Leuchtmittel (2) im Leuchtengehäuse (1) angeordnet ist, und wobei die kapazitive Sensor-Elektrode (10,11) zur Erfassung von Zugriffswünschen eines Benutzers auf ein Zugangssystem des Kraftfahrzeugs ausgebildet ist.

## Claims

1. An external light for a motor vehicle, having a light housing (1), which has at least one partially transparent radiation face (4) in the radiation direction, and a lamp (2), which is arranged on or in the housing in a retention and supply socket and is oriented for radiation through the partially transparent radiation face (4), at least one sensor electrode (10, 11) being arranged in the beam region between lamp (2) and partially transparent radiation face (4),
**characterised in that**
the sensor electrode (10, 11) is a capacitive sensor electrode and the capacitive sensor electrode (10, 11) is flat, in the form of a conductive coating on the inside of the partially transparent radiation face (4) of the light housing (1) and is transparent to radiated light of the lamp (2), wherein the capacitive sensor electrode (10, 11) is contacted to sense approaches of a user and is designed to detect access requests of a user to an access system of the motor vehicle.

2. The external light according to one of the preceding claims,
**characterised in that**
the transparency to the radiated light in the capacitive sensor electrode region is greater than 80%.

3. The external light according to one of the preceding claims,
**characterised in that**
the capacitive sensor electrode (10, 11) is conductively coupled in the edge region to signal lines, which are coupled to an evaluation circuit.

4. An external light for a motor vehicle, having a light housing (1), which has at least one partially transparent radiation face (4) in the radiation direction, and a lamp (2), which is arranged on or in the housing in a retention and supply socket and is oriented for radiation through the partially transparent radiation face (4), at least one sensor electrode (10, 11) being arranged in the beam region between lamp (2) and partially transparent radiation face (4), the sensor electrode (10, 11) being flat and transparent to radiated light of the lamp (2),
**characterised in that**
the sensor electrode (10, 11) is a capacitive sensor electrode, wherein the capacitive sensor electrode (10, 11) is contacted to sense approaches of a user, wherein the capacitive sensor electrode (10, 11) is in the form of a conductive coating on a transparent carrier, which is arranged between partially transparent radiation face (4) and lamp (2) in the light housing (1), and wherein the capacitive sensor electrode (10, 11) is designed to detect access requests of a user to an access system of the motor vehicle.

## Revendications

1. Lampe extérieure pour un véhicule automobile, avec un boîtier de lampe (1), qui en direction de rayonnement comporte une surface de rayonnement (4) au moins partiellement transparente et avec un moyen d'éclairage (2), lequel est placé sur ou dans le boîtier, dans une douille de retenue et d'alimentation et qui est orienté pour émettre à travers la surface de rayonnement (4) partiellement transparente, dans la zone de rayonnement entre le moyen d'éclairage (2) et la surface de rayonnement (4) partiellement transparente étant placée au moins une électrode de détection (10, 11),
**caractérisé en ce que** l'électrode de détection (10, 11) est une électrode de détection capacitive et **en ce que** l'électrode de détection (10, 11) capacitive est conçue en nappe en tant que revêtement conducteur sur la face intérieure de la surface de rayonnement (4) partiellement transparente du boîtier de lampe (1) et est transparente à la lumière émise par le moyen d'éclairage (2), l'électrode de détection (10, 11) capacitive étant mise en contact pour détecter l'approche d'un utilisateur et pour capter des souhaits d'accès à un système d'accès du véhicule par un utilisateur.

2. Lampe extérieure selon l'une quelconque des revendications précédentes, **caractérisée en ce que** la transparence à la lumière émise dans la zone de l'électrode capacitive est supérieure à 80 %.

3. Lampe extérieure selon l'une quelconque des revendications précédentes, **caractérisée en ce que** dans la zone marginale, l'électrode de détection (10, 11) capacitive est couplée de manière conductrice à des lignes de signalisation qui sont couplées à un circuit d'évaluation.

4. Lampe extérieure pour un véhicule automobile, avec un boîtier de lampe (1), qui en direction de rayonnement comporte une surface de rayonnement (4) au moins partiellement transparente et avec un moyen d'éclairage (2), lequel est placé sur ou dans le boîtier, dans une douille de retenue et d'alimentation et qui est orienté pour émettre à travers la surface de rayonnement (4) partiellement transparente, dans la zone de rayonnement entre le moyen d'éclairage (2) et la surface de rayonnement (4) partiellement transparente étant placée au moins une électrode de détection (10, 11), l'électrode de détection (10, 11) étant conçue en nappe et étant transparente à la lumière émise par le moyen d'éclairage (2)
**caractérisée en ce que** l'électrode de détection (10, 11) est une électrode de détection capacitive, l'électrode de détection (10, 11) capacitive étant mise en contact pour détecter l'approche d'un utilisateur, l'électrode de détection (10, 11) capacitive étant conçue en tant que revêtement conducteur sur un support transparent qui est placé dans le boîtier de lampe (1) entre la surface de rayonnement (4) partiellement transparente et le moyen d'éclairage (2) et l'électrode de détection (10, 11) capacitive étant conçue pour capter des souhaits d'accès à un système d'accès au véhicule par un utilisateur.
